Europäisches Patentamt

European Patent Office

Office européen des brevets

(11) Publication number: **0 401 877**
**A1**

## (12) EUROPEAN PATENT APPLICATION

(21) Application number: **90114565.6**

(22) Date of filing: **10.02.87**

(51) Int. Cl.⁵: **G05D 1/06**

This application was filed on 30 - 07 - 1990 as a divisional application to the application mentioned under INID code 60.

(30) Priority: **13.02.86 US 829731**

(43) Date of publication of application:
**12.12.90 Bulletin 90/50**

(60) Publication number of the earlier application in accordance with Art.76 EPC: **0 256 124**

(84) Designated Contracting States:
**BE CH DE FR GB IT LI NL SE**

(71) Applicant: **SUNDSTRAND DATA CONTROL, INC.**
**15001 N.E. 36th Street P.O. Box 97001**
**Redmond, WA 98073-9701(US)**

(72) Inventor: **Muller, Hans R.**
**10567- 158th Avenue N.E.**
**Redmond, Washington 98052(US)**
Inventor: **Glover, John H.**
**325 - 5th Avenue South**
**Kirkland, Washington 98033(US)**

(74) Representative: **SERJEANTS**
**25, The Crescent King Street**
**Leicester, LE1 6RX(GB)**

(54) **Wind shear detection and alerting system.**

(57) A wind shear detection and warning system for an aircraft includes means responsive to a wind shear signal for providing a warning when the wind shear encountered by the aircraft exceeds a threshold level. The system may be made more sensitive at low altitudes by passing the wind shear signal through an averaging filter and decreasing the time constant of that filter at low altitudes.

## Wind Shear Detection and Alerting System

### Field of the Invention

This invention relates generally to wind shear detection systems. and more particularly to airborne wind shear detection systems for alerting the pilot of a wind shear condition if the aircraft penetrates a wind shear condition of sufficient force to pose a hazard to the aircraft.

This invention is fully disclosed in EP A 256124 from which this Application is divided.

### Description of Prior Art

Various wind shear detection and warning systems are known. One such system is disclosed in European Patent No.0125087, in which on board measurements of various aircraft flight parameters are used to provide signals representing wind shear components in the horizontal and vertical directions, and their rates of change with time. A warning of moderate wind shear is given if either wind shear signal is sustained above a predetermined level and a warning of severe wind shear is given if increasing tail shear is detected within a fixed period thereafter.

### Summary of the Invention

The invention provides a wind shear detection and warning system for an aircraft comprising means for providing a signal that is a measure of the wind shear encountered by the aircraft; means responsive to the wind shear signal for providing a wind shear warning when the wind shear signal exceeds a threshold level; means for providing a signal that is a measure of the radio altitude of the aircraft; and means responsive to the radio altitude signal to make the system more sensitive at low altitudes and less sensitive at high altitudes.

In a preferred embodiment of the invention, the signal passes through an averaging filter with a variable time constant, the system being made more sensitive at low altitudes by decreasing the time constant of the filter and less sensitive at high altitudes by increasing the time constant of the filter.

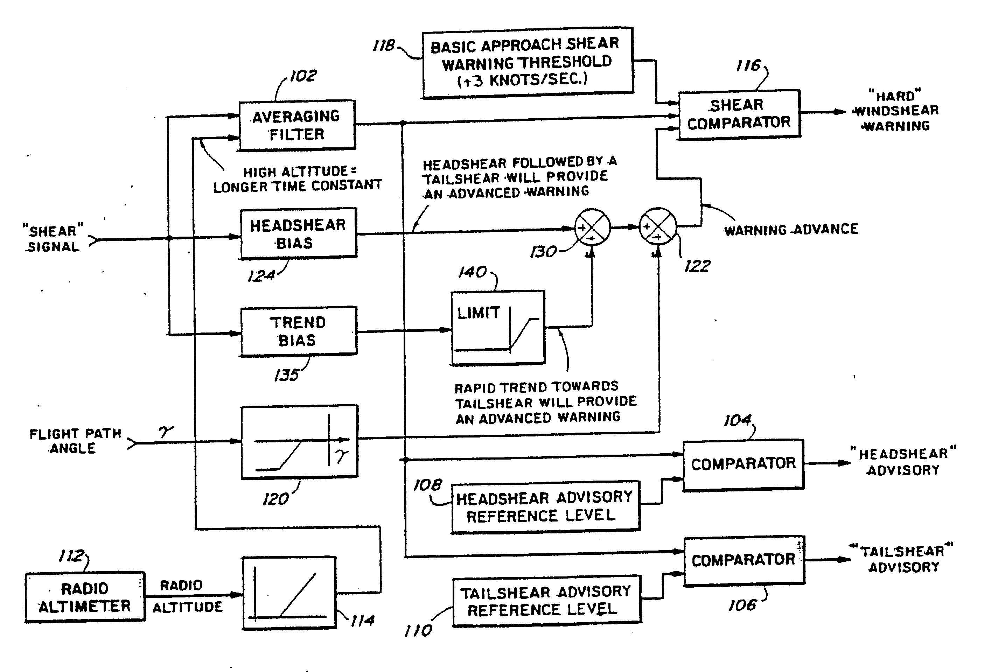

### Description of the Drawing

The Figure is a block diagram illustrating logic circuitry incorporating the present invention that is responsive to a 'shear' signal for generating warning and advisory signals.

In the Figure, the logic circuit receives as an input a 'shear' signal, representative of the wind shear encountered by the aircraft. Such a signal may suitably be provided by the wind shear detection system of EP A 256124. The 'shear' signal is applied to an averaging filter 102 whose output may then be applied to a pair of comparators 104 and 106. The comparators 104 and 106 compare the filtered 'shear' signal with a pair of reference signals, namely a head shear advisory level and a tail shear advisory level obtained from a head shear advisory reference level circuit 108 and a tail shear advisory reference level circuit 110. If either reference level is exceeded by the filtered shear signal, either a head shear advisory or a tail shear advisory message will be generated. Such an advisory indication would be advantageous in a reversing shear type of situation since a head shear following by a tail shear is particularly hazardous. The system is made responsive to radio altitude to make the system more sensitive near the ground and less sensitive at higher altitudes. For example, the time constant of the averaging filter may be adjusted as a function of altitude. with the time constant being made longer at high altitudes and shorter at low altitudes to reduce response time. In the block diagram illustrated in the Figure, a radio altitude signal from a radio altimeter 112 is applied to a function generator 114 to provide a signal which alters the time constant of the averaging filter 102 as a function of radio altitude.

In addition, by utilizing a comparator such as a comparator 116, the criteria at which a wind shear warning would be given could be altered as a function of various flight parameters. For example a hard wind shear warning requiring the pilot to take immediate action would be generated when the wind shear exceeds a predetermined warning reference, such as, for example, 3 knots per second (1.54m/s 2) as provided by a basic approach shear warning threshold reference circuit 118. However, the comparator could be biased so that the warning would be given before the basic warning threshold was crossed under particularly hazardous conditions. For example, the warning could be advanced as a function of flight path angle, with the warning being increased for unusually steep flight path angles. For example, by applying the flight path angle signal $\gamma$ to a function generator 120 a biasing signal that is a function of flight path angle could be generated. This signal could be used to advance the warning by applying the bias signal to the comparator 116 via a summing junction 122.

As previously stated, one particularly hazardous condition exists when a head shear is followed by a tail shear because such a condition results in a rapid loss of air speed that could cause the aircraft to stall if appropriate action is not taken. Thus, a head shear bias circuit 124 may be provided to advance the warning in the event of a head shear followed by a tail shear. In addition, the warning may be advanced as a function of an increasing tail shear trend. For example, the 'shear' signal could be differentiated by a trend bias circuit 135 to provide a trend bias signal to a limiter 140, which would pass only increasing tail shear trends.

The output from limiter 140 could be combined with the output of the head shear bias circuit 124 at summing junction 130 before passing to the comparator 116.

## Claims

1. A wind shear detection and warning system for an aircraft comprising:
means for providing a signal that is a measure of the wind shear encountered by the aircraft;
means 116 or 104 or 106 responsive to the wind shear signal for providing a wind shear warning when the wind shear signal exceeds a threshold level;
means 112 for providing a signal that is a measure of the radio altitude of the aircraft; and
means 102 responsive to the radio altitude signal to make the system more sensitive at low altitudes and less sensitive at high altitudes.

2. A system according to claim 1, wherein the wind shear signal passes through an averaging filter 102 with a variable time constant, the system being made more sensitive at low altitudes by decreasing the time constant of the filter and less sensitive at high altitudes by increasing the time constant of the filter.

"HARD" WINDSHEAR WARNING

"HEADSHEAR" ADVISORY

"TAILSHEAR" ADVISORY

116 — SHEAR COMPARATOR

104 — COMPARATOR

106 — COMPARATOR

WARNING ADVANCE

122

130

118 — BASIC APPROACH SHEAR WARNING THRESHOLD (+3 KNOTS/SEC.)

HEADSHEAR FOLLOWED BY A TAILSHEAR WILL PROVIDE AN ADVANCED WARNING

140 — LIMIT

RAPID TREND TOWARDS TAILSHEAR WILL PROVIDE AN ADVANCED WARNING

108 — HEADSHEAR ADVISORY REFERENCE LEVEL

110 — TAILSHEAR ADVISORY REFERENCE LEVEL

102 — AVERAGING FILTER

HIGH ALTITUDE = LONGER TIME CONSTANT

124 — HEADSHEAR BIAS

135 — TREND BIAS

120

114

"SHEAR" SIGNAL

FLIGHT PATH ANGLE    γ

112 — RADIO ALTIMETER

RADIO ALTITUDE

<table>
<tr><td></td><td>European Patent<br>Office</td><td><strong>EUROPEAN SEARCH REPORT</strong></td><td>Application Number</td></tr>
</table>

EP    90 11 4565

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4 ) |
|---|---|---|---|
| D,Y | EP-A-0125087 (SPERRY CORP.) <br> * page 12, line 7 - page 21, line 17; figures 1-9 * | 1, 2 | G05D1/06 |
| Y | US-A-4189777 (D. KUNTMAN) <br> * column 2, line 54 - column 6, line 14; figures 1-5 * | 1, 2 | |
| A | GB-A-1586839 (J.H. BLISS) <br> * page 2, line 100 - page 9, line 70; figures 1-12 * | 1, 2 | |
| E | EP-A-0229197 (THE BOEING COMP.) <br> * column 2, line 28 - column 10, line 33; figures 1-4b * | 1, 2 | |

TECHNICAL FIELDS
SEARCHED (Int. Cl.4 )

G05D
B64D
G01C
G01P

The present search report has been drawn up for all claims

| Place of search | Date of completion of the search | Examiner |
|---|---|---|
| THE HAGUE | 02 OCTOBER 1990 | FOURRICHON P.M.L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)